Europäisches Patentamt

European Patent Office

Office européen des brevets

(19)

(11) Veröffentlichungsnummer: **0 332 011 B1**

(12) # EUROPÄISCHE PATENTSCHRIFT

(45) Veröffentlichungstag der Patentschrift:
06.11.91 Patentblatt 91/45

(51) Int. Cl.$^5$: **C08F 220/14, C08F 265/06,**
**C09D 133/12**

(21) Anmeldenummer: 89103443.1

(22) Anmeldetag: 28.02.89

(54) **Herstellung von wässrigen Polyalkylmethacrylat-Dispersionen durch Emulsionspolymerisation in zwei Stufen und deren Verwendung in Holzlacken.**

(30) Priorität: 08.03.88 DE 3807531

(43) Veröffentlichungstag der Anmeldung:
13.09.89 Patentblatt 89/37

(45) Bekanntmachung des Hinweises auf die
Patenterteilung:
06.11.91 Patentblatt 91/45

(84) Benannte Vertragsstaaten:
AT BE CH DE ES FR GB IT LI NL SE

(56) Entgegenhaltungen:
DE-A- 2 357 152
US-A- 4 385 152

(73) Patentinhaber: BASF Aktiengesellschaft
Carl-Bosch-Strasse 38
W-6700 Ludwigshafen (DE)

(72) Erfinder: Dehne, Heinrich
Saarlandstrasse 40
W-6700 Ludwigshafen (DE)
Erfinder: Vinke, Johannes, Dr.
Heinrich-von-Kleist-Strasse 9
W-6832 Hockenheim (DE)
Erfinder: Wistuba, Eckehardt, Dr.
Im Obergarten 7
W-6702 Bad Duerkheim (DE)

## Beschreibung

Die vorliegende Erfindung betrifft ein Verfahren zur Herstellung von wäßrigen Dispersionen von Alkylmethacrylat-Copolymerisaten durch zweistufige Emulsionscopolymerisation und die Verwendung der nach diesem Verfahren hergestellten Dispersionen in Holzlacken.

Holzoberflächen, z.B. von Panelen, Möbeln und Türen, werden aus Gründen der Ästhetik und des Schutzes gegen Umwelteinflüsse häufig mit transparenten Lacken beschichtet. Verwendung finden bisher Nitro-Lacke, säurehärtende Alkyl-Amino-Lacke, Lacke auf Basis von ungesättigten Polyestern, Polyurethan-Lacke und neuerdings auch wäßrige Lacke auf Basis von Polymer-Dispersionen. Die genannten klassischen Lacke sind aufgrund der darin enthaltenen und während der Verarbeitung an die Umwelt abgegebenen Lösemittel bedenklich.

Aus der EP-A-29144 ist die Verwendung von N-Methylol(meth)-acrylamid einpolymerisiert enthaltenden Polymer-Dispersionen für das Lackieren von Holzoberflächen bekannt. Die Methylol-Gruppen können bei Temperaturen über 100°C miteinander reagieren, d.h. der Lack kann vernetzen und somit in seiner Widerstandsfähigkeit gegen chemische Einflüsse verbessert werden. Nachteilig ist dabei jedoch, daß für das Vernetzen in Gegenwart des Holzes erhitzt werden muß und daß bei der Vernetzungsreaktion Formaldehyd abgespalten wird. Derartige Beschichtungen lassen zudem hinsichtlich ihrer Kratzfestigkeit, Härte, Elastizität, Schleifbarkeit und Stapelfestigkeit zu wünschen übrig. Um das Eigenschaftsniveau von Holzlacken in der Praxis optimal einzustellen, hat man auch schon Mischungen von Polymer-Dispersionen eingesetzt, beispielsweise um die Filmhärte anzuheben. Dabei treten jedoch häufig Trübungen der Filme auf, die zudem zum Weißanlaufen unter dem Einfluß von Wasser neigen. Außerdem tritt dabei in den Filmen aufgrund einer Versprödung häufig bei mechanischer Beanspruchung der sogenannte Weißbruch und bei Temperaturbeanspruchungen unter "Kalt-Warm-Wechsel" (cold-check-test) treten Risse und Abplatzungen auf.

Aufgabe der vorliegenden Erfindung ist es nun, eine harte Polymethacrylsäureester-Dispersion zur Verfügung zu stellen, die mit weicheren Polymethacrylsäureester-Dispersionen verträglich ist und im Gemisch damit nach der Verfilmung transparente, zähelastische und schleifbare Filme liefert, die zur Beschichtung von Holz besonders geeignet sind.

Zur Lösung dieser Aufgabe wurde gefunden, daß man wäßrige Dispersionen von Alkylmethacrylat-Copolymerisaten mit 3-6 C-Atome enthaltenden Mono- und/oder Dicarbonsäuren durch stufenweise Emulsionscopolymerisation in Gegenwart von üblichen wasserlöslichen radikalbildenden Polymerisationsinitiatoren und von üblichen Emulgatoren bei üblichen Polymerisationstemperaturen mit Vorteil herstellen kann, in dem man mindestens 37,5 Gew.% Methylmethacrylat,
14,75-62,5 Gew.% n-Butylmethacrylat und/oder Iso-Butylmethacrylat,
1-5 Gew.% 3-6 C-Atome enthaltende $\alpha,\beta$-monoolefinisch ungesättigte Mono- und/oder Dicarbonsäuren und
0-5 Gew.% Amide 3-6 C-Atome enthaltender $\alpha,\beta$-monoolefinisch ungesättigter Mono- und/oder Dicarbonsäuren
in wäßriger Emulsion polymerisiert,
wobei in einer ersten Stufe
80,75-35 Gew.% Methylmethacrylat,
25,5-2,5 Gew.% der Butylmethacrylate,
1-5 Gew.% der olefinisch ungesättigte Carbonsäuren und
0-5 Gew.% der olefinisch ungesättigte Carbonsäureamide
und einer in einer zweiten Stufe
15-0,75 Gew.% Methylmethacrylat,
47,5-10,5 Gew.% der Butylmethacrylate,
1-5 Gew.% der olefinisch ungesättigten Carbonsäuren und
0-5 Gew.% der olefinisch ungesättigten Carbonsäureamide
polymerisiert werden, derart, daß die Dispersion eine Mindestfilmbilde-Temperatur von 65-110°C und einen Lichtdurchlässigkeitswert von mindestens 85% hat und die Gewichtsprozente jeweils auf die gesamten Monomeren bezogen sind. Derartige Polymethacrylat-Dispersionen eignen sich besonders im Gemisch mit 95-40 Gew.% (fest/fest), bezogen auf das Gemisch, an wäßrigen Polyalkylmethacrylat-Dispersionen einer Mindestfilmbilde-Temperatur von 20-60°C und eines Lichtdurchlässigkeitswertes von mindestens 80%, deren Polymerisat sich zu 95-99% seines Gewichts aus Methacrylsäureestern 1-8 C-Atome enthaltender Alkanole und zu 1-5% seines Gewichtes aus 1-6 C-Atome enthaltenden $\alpha,\beta$-monoolefinisch ungesättigten Mono- und/oder Dicarbonsäuren und/oder deren Amiden zusammensetzt, als Bindemittel in Holzlacken. Derartige Gemische ergeben nach dem Auftragen und Trocknen Filme, die klar-transparent, zähelastisch und kratzfest sind, die nicht zum Weißbruch bei mechanischer Beanspruchung und nicht zur Weißfärbung unter dem Einfluß von Wasser und beim cold-check-test nicht zur Bildung von Rissen und Abplatzungen neigen. Außerdem zeigen der-

2

artige Gemische bei ihrer Verwendung als Bindemittel für Holzlacke nach dem Auftrocknen auf Holz ein überraschend gutes Hervorheben der Oberflächenzeichnung des Holzes (Anfeuerung) und sind gut schleifbar.

Bei der Herstellung der wäßrigen Polyalkylmethacrylat-Dispersionen einer Mindestfilmbilde-Temperatur von 65-110°C können die üblichen wasserlöslichen radikalbildenden Polymerisationsinitiatoren in Mengen von 0,25-2, insbesondere von 0,7-1,5 Gew.%, bezogen auf die zu polymerisierenden Monomeren eingesetzt werden. Beispiel hierfür sind wasserlösliche Peroxydisulfate, wie Ammoniumpersulfat, Kaliumpersulfat und Natriumpersulfat, Perborate, sowie die üblichen Redox-Initiatorsysteme, z.B. auf Basis von Wasserstoffperoxid und Persulfaten einerseits und Ascorbinsäure, Natriumbisulfid oder Natriumformaldehydsulfoxylat andererseits, gegebenenfalls in Gegenwart von Schwermetallionen.

Als Emulgatoren kommen die üblichen, bei der Emulsionspolymerisation olefinisch ungesättigter Monomere verwendeten ionischen und gegebenenfalls zusätzlich nichtionische Emulgatoren in Frage, z.B. Natriumlaurylsulfat, Schwefelsäurehalbester oxethylierter Alkyl-Phenole oder oxethylierter Alkohole und die Sulfonate aromatischer oder aliphatischer Kohlenwasserstoffe. Beispiele für nichtionische Emulgatoren sind oxethylierte Alkyl-Phenole, oxethylierte Alkohole und oxethylierte Amide.

Die Stufenpolymerisation wird im allgemeinen bei Temperaturen von 30-100, insbesondere von 60-95°C durchgeführt, wobei die Polymerisationstemperatur in der ersten und zweiten Stufe des Verfahrens gleich oder verschieden sein kann. Im allgemeinen arbeitet man bei dem neuen Herstellungsverfahren derart, daß die Gesamtmenge an Monomeren und der wäßrigen Phase derart gewählt werden, daß man eine 30-70%ige, insbesondere eine 40-60%ige wäßrige Dispersion erhält, wobei man vorzugsweise nach dem sogenannten Emulsions-Zulauf-Verfahren arbeitet, wobei man einer auf Polymerisationstemperatur erwärmten wäßrigen Vorlage nach dem Anpolymerisieren eines kleinen Anteils der Monomeren der ersten Stufe eine wäßrige Emulsion des Restes der Monomeren der ersten Stufe und nach deren Auspolymerisieren eine wäßrige Emulsion der Monomeren der zweiten Stufe unter Rühren zuführen kann. Das Verfahren kann ferner nach der Methode des Monomeren-Zulauf-Verfahrens oder in einer zweistufigen Batch-Fahrweise durchgeführt werden.

Als Butylmethacrylat wird bei dem Verfahren n-Butylmethacrylat vorgezogen, doch kann auch Isobutylmethacrylat oder Gemische dieser Butylmethacrylate eingesetzt werden. Als olefinisch ungesättigte Carbonsäuren sind vor allem Acryl- und Methacrylsäure, insbesondere Methacrylsäure, sowie ferner Maleinsäure, Itaconsäure und Fumarsäure geeignet. Ihre Menge beträgt vorzugsweise 1-3,5 Gew.%. Als olefinisch ungesättigte Carbonsäureamide kommen vor allem Acrylamid und Methacrylamid sowie ferner Maleinsäuremono- und -diamid, Fumarsäurediamid und Itaconsäurediamid in Frage. Vorzugsweise enthalten die Stufenpolymerisate 0,5-2,5%, bezogen auf die gesamten Monomeren, an Amiden $\alpha,\beta$-monoolefinisch ungesättigter Mono-und/oder Dicarbonsäuren einpolymerisiert.

Die nach dem neuen Verfahren hergestellten Polymethacrylat-Dispersionen haben eine Mindestfilmbilde-Temperatur (in Abwesenheit von Lösungsmitteln gemessen) von 65-110°C und Mindestfilmbilde-Temperaturen von 70 bis 95°C werden vorgezogen. Ihr Lichtdurchlässigkeitswert beträgt mindestens 85%, meist 88 bis 96%, insbesondere 90 bis 94%. Dies entspricht etwa einer mittleren Teilchengröße von 0,03 bis 0,15 nm.

Beim Einsatz der nach dem neuen Herstellungsverfahren hergestellten wäßrigen Dispersionen der Alkylmethacrylat-Stufencopolymerisate in Holzlacken werden mit Vorteil 95-40, insbesondere 85 bis 50 Gew.% (fest/fest) an wäßrigen Polyalkylmethacrylat-Dispersionen einer Mindestfilmbilde-Temperatur von 20-60°C und eines Lichtdurchlässigkeitswertes von mindestens 80%, deren Copolymerisat sich aus 95-99% seines Gewichts aus Methacrylsäureesteren 1-8 C-Atome enthaltender Alkanole und aus 1-5% seines Gewichts aus 1-6 -Atome enthaltenden $\alpha,\beta$-monoolefinisch ungesättigten Mono- und/oder Dicarbonsäuren und/oder deren Amiden zusammensetzt, mitverwendet. Derartige wäßrige Dispersionen können in an sich üblicher Weise, vorzugsweise nach dem Emulsions-Zulauf-Verfahren unter Verwendung der üblichen, z.B. obengenannten, Emulgatoren und Polymerisationsinitiatoren bei den üblichen Polymerisationstemperaturen hergestellt werden, wobei man die Mengen an Monomeren und wäßriger Phase im allgemeinen derart wählt, daß man 30-70, vorzugsweise 40-60%ige wäßrige Dispersionen erhält.

Dabei wählt man meist neben den $\alpha,\beta$-monoolefinisch ungesättigten Carbonsäuren und deren Amiden der obengenannten Art als Methacrylsäuremethylester den Methacrylsäuremethyl- und -ethylester in Mengen von 0-60 Gew.%, den Acrylsäure-2-ethylhexylester in Mengen von 0-40 Gew.% und die Methacrylsäureester von 4-6 C-Atome enthaltenden Alkanolen, wie besonders n-Butylmethacrylat und Iso-Butylmethacrylat, in Mengen von 0-99 Gew.%. Der Anteil an $\alpha,\beta$-monoolefinisch ungesättigten Carbonsäuren und/oder deren Amiden soll bei diesen statistisch zusammengesetzten Copolymerisaten vorzugsweise 0,5 bis 4 Gew.%, bezogen auf die gesamten Monomeren, betragen. Gegebenenfalls können diese Dispersionen 0-4 Gew.%, bevorzugt 0-1,5 Gew.% Divinylverbindungen, wie Divinylbenzol oder Butandioldiacrylat, sowie 0-4 Gew.% einer einpolymerisierbaren $\alpha,\beta$-ethylenisch ungesättigten Carbonylverbindung, wie Divinylacrylamid, und 0-3 Gew.% einer Dihydrazidverbindung, wie Adipinsäuredihydrazid enthalten. Bei dem Einsatz der nach dem neuen Polymerisationsverfahren hergestellten wäßrigen Polymethacrylat-Stufencopolymerisat-Dispersionen zusam-

EP 0 332 011 B1

men mit den in herkömmlicher Weise hergestellten Polymethacrylat-Dispersionen einer Mindestfilmbilde-Temperatur von 20-60°C als Bindemittel für Holzlacke können übliche Filmbilde-Hilfsmittel, wie Butylglykol und Butyldiglykolacetat, übliche Entschäumer, wie Silicone, bevorzugt Mineralöle, Verdicker, z.B. auf Polyurethan- und/oder Polyacrylat-Basis sowie gegebenenfalls übliche Netz- und Mattierungsmittel mitverwendet werden. Die Holzlacke können in an sich üblicher Weise z.B. durch Streichen, Spritzen, Rollen oder Gießen auf die Holzoberflächen aufgebracht und in an sich üblicher Weise getrocknet werden.

Die in den folgenden Beispielen angegebenen Prozente beziehen sich auf das Gewicht. Die darin angegebenen Viskositäten wurden nach DIN 53019, die darin angegebenen LD-Werte wie folgt gemessen : Eine Dispersion wird mit Wasser auf 10 Gew.% verdünnt. Von dieser verdünnten Dispersion pipettiert man 10 ml in einem 1000-ml-Kolben und füllt auf 1 l auf. Gegen Wasser (LD = 100) wird in einer 2,5 cm breiten Küvette die Lichtdurchlässigkeit bestimmt. Die darin angegebenen Teile sind Gewichtsteile.

Beispiel 1

In einem Reaktionsgefäß legt man 550 g Wasser und 3,6 g einer 28%igen wäßrigen Lösung eines Natriumsalzes eines $C_{12}$-$C_{14}$-Fettalkoholethersulfats des Ethoxylierungsgrads 2,5 vor, erwärmt auf 85°C und gibt unter Rühren jeweils 10% von Zulauf 1 und Zulauf 3 zu. Nach 1/4 Stunde wird der Rest von Zulauf 1 innerhalb von 110 min. zugefahren. Man fügt dann Zulauf 2 innerhalb von 40 min. zu. Die Zulaufdauer von Zulauf 3 beträgt 2 3/4 Stunden. Nach Abschluß des Zulaufs 2 wird 1 3/4 Stunden bei 85°C nachpolymerisiert, dann gekühlt und der pH-Wert mit konzentriertem Ammoniakwasser (25%ig) auf 7,5 gestellt.

Zulauf 1 (1. Stufe)

510 g Wasser
24,2 g $C_{12}$-$C_{14}$-Fettalkoholethersulfat-Na-Salz (EO 2,5) (28%ig)
27,75 g Methacrylsäure
9 g Methacrylsäureamid
765 g Methylmethacrylat
15 g n-Butylmethacrylat

Zulauf 2 (2. Stufe)

170 g Wasser
8 g $C_{12}$-$C_{14}$-Fettalkoholethersulfat-Na-Salz (EO 2,5) (28%ig)
9,25 g Methacrylsäure
3 g Methacrylsäureamid
85 g Methacrylsäuremethylester
135 g n-Butylmethacrylat

Zulauf 3

150 g Wasser
2 g Natriumperoxidisulfat

Man erhält eine wäßrige Dispersion eines Polymethacryl-Stufenpolymerisats eines Feststoffgehalts von 43 Gew.%, einer Viskosität von 195 mpas und des LD-Werts 89%.

Beispiel 2

In einem Reaktionsgefäß wird eine Vorlage aus 550 g Wasser und 3,6 g einer 28%igen wäßrigen Lösung des Natriumsalzes eines $C_{12}$-$C_{14}$-Fettalkoholethersulfats des Ethoxylierungsgrads 2,5 auf 80°C erhitzt. Man fügt dann jeweils 10% der Zuläufe 1 und 3 zu und erhöht die Temperatur innerhalb von 1/4 Stunde auf 85°C. Danach wird der Rest des Zulaufs 1 innerhalb von 95 min. und anschließend innerhalb von 55 min. Zulauf 2 zugegeben. Zulauf 3 wird innerhalb von 2 3/4 Stunden zugefahren. Nach Beendigung von Zulauf 2 wird noch 1 3/4 Stunden nachpolymerisiert, dann gekühlt und der pH-Wert mit konzentriertem wäßrigen Ammoniak (25%ig) auf 7,3 gestellt.

4

Zulauf 1 (1. Stufe)

440 g Wasser
20,9 g $C_{12}$-$C_{14}$-Fettalkoholethersulfat-Na-Salz (EO 2,5) (28%ig)
24 g Methacrylsäure
7,8 g Methacrylsäureamid
595 g Methacrylsäuremethylester
45 g n-Butylmethacrylat

Zulauf 2 (2. Stufe)

200 g Wasser
11,3 g $C_{12}$-$C_{14}$-Fettalkoholethersulfat-Na-Salz (EO 2,5) (28%ig)
13 g Methacrylsäure
4,2 g Methacrylsäureamid
225 g Methmethacrylat
105 g n-Butylmethacrylat

Zulauf 3

150 g Wasser
2 g Natriumperoxidisulaft

Man erhält eine Dispersion (2) eines Feststoffgehalts von 42,8% und einer Viskosität von 225 mpas deren LD-Wert 92% beträgt.

Vergleichsdispersion

In einem Reaktionsgefäß wird eine Vorlage aus 690 g Wasser und 3,6 g einer 28%igen wäßrigen Lösung des Natriumsalzes eines $C_{12}$-$C_{14}$-Fettalkoholethersulfats des Ethoxylierungsgrads 2,5 auf 85°C erwärmt. Hierzu fügt man jeweils 10% der Zuläufe 1 und 2 und polymerisiert 1/4 Stunde an. Dann wird der Rest von Zulauf 1 in 2 1/2 Stunden und Zulauf 2 in 2 3/4 Stunden zugefahren. Nach Beendigung von Zulauf 2 wird 1 3/4 Stunden nachpolymerisiert, dann gekühlt und der pH-Wert mit konzentriertem wäßrigem Ammoniak (25%ig) auf 7,5 gestellt.

Zulauf 1

555 g Wasser
32,7 g $C_{12}$-$C_{14}$-Fettalkoholethersulfat-Na-Salz (EO 2,5) (28%ig)
12,1 g Methacrylsäureamid
37,6 g Methacrylsäure
864 g Methacrylsäuremethylester
151 g n-Butylmethacrylat

Zulauf 2

184 g Wasser
1,02 g Kaliumpersulfat

Man erhält eine wäßrige Dispersion eines statistischen Polymethacrylsäureester-Copolymerisats eines Feststoffgehalts von 42,98% der Viskosität 180 mpas und des LD-Werts 85%.

Für die Herstellung der im folgenden angegebenen Holzlacke wurde zusätzlich zu den Dispersionen (1), (2) und des Vergleichsversuchs eine Dispersion

a) hergestellt in üblicher Weise durch Emulsionspolymerisation (Emulsions-Zulauf-Verfahren) unter Verwendung von 2%, bezogen auf die Monomeren, an Natriumsalz eines $C_{12}$-$C_{14}$-Fettalkoholethersulfats vom

Ethoxylierungsgrad 2,5 aus 81% n-Butylmethacrylat, 15% Methylmethacrylat, 1,5% Acrylsäure, 1,5% Methacrylsäure und 1% Acrylamid ; Polymerengehalt 44%, Viskosität 200 mpas und LD-Wert 96% und eine Dispersion

b) hergestellt in üblicher Weise nach dem Emulsions-Zulauf-Verfahren unter Verwendung von 1,5%, bezogen auf die Monomeren, Laurylsulfat und 0,5%, bezogen auf die Monomeren ethoxyliertes Isooctylphenol eines Oxethylierungsgrads von 25 aus 96,1% n-Butylmethacrylat, 1,5% Acrylsäure, 1,4% Methacrylsäure und 1,0% Acrylamid ; Feststoffgehalt 47%, Viskosität 350 mpas und LD-Wert 94% verwendet.

Holzlack 1 (Dispersionslack für Möbel zum Spritzen)

Zu einer Paste aus
30 Teilen Propylenglykolmonobutylether,
30 Teilen Ethyldiglykol,
10 Teilen 3,3,5-Trimethylpentan-1,3-diol-isobutyrat,
30 Teilen Butyldiglykol,
10 Teilen Soja-Lecithin,
5 Teilen handelsüblichem Entschäumer auf Mineralölbasis,
5 Teilen eines mit 35 Mol Propylenoxyd und 5 Mol Ethylenoxyd oxyalkylierten $C_{16}$-$C_{19}$-Oxoalkohols,
25 Teilen Wasser und
10 Teilen handelsüblichen Mattierungsmittel auf Siliciumoxidbasis
gibt man langsam unter Rühren
220 Teile Dispersion (1),
520 Teile Dispersion (a) und
80 Teile einer 35%igen wäßrigen Polyethylenwachsdispersion.
Die mit diesem Dispersionslack (1) erzielten Ergebnisse sind in Tabelle 1 zusammengefaßt.

Holzlack 2 (Dispersionslack für Möbel zum Spritzen)

Zu einer Paste aus
30 Teilen Propylenglykolmonobutylether,
30 Teilen Ethyldiglykol,
10 Teilen 3,3,5-Trimethylpentan-1,3-diol-isobutyrat,
30 Teilen Butyldiglykol,
10 Teilen Soja-Lecithin,
5 Teilen handelsüblichen Entschäumer auf Mineralölbasis,
5 Teilen eines mit 35 Mol Propylenoxyd und 5 Mol Ethylenoxyd oxalkylierten $C_{16}$-$C_{19}$-Oxoalkohols,
25 Teilen Wasser,
10 Teilen handelsüblichem Mattierungsmittel auf Siliciumdioxidbasis gibt man unter langsamem Rühren
370 Teile Dispersion (2),
370 Teile Dispersion (b) und
80 Teile einer 35%igen wäßrigen Paraffinwachs-Emulsion (Erweichungspunkt 70-130°C).
Die mit diesem Dispersionslack (2) erzielten Ergebnisse sind in Tabelle 1 zusammgenfaßt.

Vergleichsholzlacke

Vergleichsversuch A

Man stellt, wie unter Holzlack (1) angegeben, einen Holzlack her, verwendet aber an Stelle der Dispersion (1) die gleiche Menge der Dispersion des Vergleichsbeispiels.
Die mit diesem Holzlack erhaltenen Ergebnisse sind in Tabelle 1 zusammengefaßt.

Vergleichsversuch B

Man stellt, wie unter Holzlack (2) angegeben, einen Holzlack her, verwendet aber an Stelle der Dispersion (2) die Dispersion aus dem Vergleichsbeispiel.
Die mit diesem Holzlack erhaltenen Ergebnisse sind in Tabelle 1 zusammengefaßt.

Tabelle 1

|  | Holzlack (1) | Holzlack (2) | Vergleichsbsp. A | Vergleichsbsp. B |
|---|---|---|---|---|
| Anfeuerung | sehr gut | gut | ausreichend | mangelhaft |
| Film auf Glas (200 μm naß) bei RT 24 Std. getrocknet | klar | klar | trüb | stark trüb |
| Schleifbarkeit | gut | sehr gut | gut | gut |
| Mechanische Beanspruchung | kein Weißbruch | schwacher Weißbruch | schwacher Weißbruch | schwacher Weißbruch |
| Cold-Check (Wechsel) | >100 | 30 | 50 | 3 |
| Widerstandsfähigkeit gegen Wasser Einwirkdauer 16 Std. Prüfung nach DIN 68 860 | 0 | 1 | 1 | 4 |

EP 0 332 011 B1

## Patentansprüche

1. Verfahren zur Herstellung von wäßrigen Dispersionen von Alkylmethacrylat-Copolymerisaten mit 3 bis 6 C-Atome enthaltenden Mono- und/oder Dicarbonsäuren durch stufenweise Emulsionscopolymerisation in Gegenwart von üblichen wasserlöslichen radikalbildenden Polymerisationsinitiatoren und von üblichen Emulgatoren bei üblichen Polymerisationstemperaturen, dadurch gekennzeichnet, daß man
mindestens 37,5 Gew.% Methylmethacrylat,
14,75 - 62,5 Gew.% n-Butylmethacrylat und/oder Iso-Butylmethacrylat,
1-5 Gew.% 3-6 C-Atome enthaltende α,β-monoolefinisch ungesättigte Mono- und/oder Dicarbonsäuren und
0-5 Gew.% Amide 3-5 C-Atome enthaltender α,β-monoolefinisch ungesättigter Mono- und/oder Dicarbonsäuren
in wäßriger Emulsion polymerisiert, wobei in einer ersten Stufe
80,75-35 Gew.% Methylmethacrylat,
25,5-2,5 Gew.% der Butylmethacrylate,
1-5 Gew.% der olefinisch ungesättigten Carbonsäuren und
0-5 Gew.% der olefinisch ungesättigten Carbonsäureamide
und in einer zweiten Stufe
15-0,75 Gew.% Methylmethacrylat,
47,5-10,5 Gew.% der Butylmethacrylate,
1-5 Gew.% der olefinisch ungesättigten Carbonsäuren und
0-5 Gew.% der olefinisch ungesättigten Carbonsäureamide
polymerisiert werden, derart, daß die Dispersion eine Mindestfilmbilde-Temperatur von 65-110°C und einen Lichtdurchlässigkeitswert von mindestens 85% hat und die Gewichtsprozente jeweils auf die gesamten Monomeren bezogen sind.

2. Verwendung der nach Anspruch 1 hergestellten wäßrigen Alkylmethacrylat-Copolymerisat-Dispersionen zusammen mit 95-40 Gew.% (fest/fest), bezogen auf beide Polymer-Dispersionen, einer wäßrigen Polyalkylmethacrylat-Dispersion einer Mindestfilmbilde-Temperatur von 20-60°C und eines Lichtdurchlässigkeitswertes von mindestens 80%, deren Polymerisat sich zu 95-99% seines Gewichts aus Methacrylsäureestern 1-8 C-Atome enthaltender Alkanole und zu 1-5% seines Gewichts aus 1-6 C-Atome enthaltenden α,β-monoolefinisch ungesättigten Mono-und/oder Dicarbonsäuren und/oder deren Amiden zusammensetzt, als Bindemittel in Holzlacken.

## Claims .

1. A process for the preparation of an aqueous dispersion of copolymers of alkyl methacrylates with mono- and/or dicarboxylic acids of 3 to 6 carbon atoms by stepwise emulsion copolymerization in the presence of a conventional water-soluble free radical polymerization initiator and of a conventional emulsifier at the usual polymerization temperatures, wherein not less than 37.5% by weight of methyl methacrylate, 14.75-62.5% by weight of n-butyl methacrylate and/or isobutyl methacrylate,
1-5% by weight of α,β-monoolefinically unsaturated mono- and/or dicarboxylic acids of 3 to 6 carbon atoms and
0-5% by weight of amides of α,β-monoolefinically unsaturated mono- and/or dicarboxylic acids of 3 to 5 carbon atoms are polymerized in aqueous emulsion,
80.75-35% by weight of methyl methacrylate,
25.5-2.5% by weight of the butyl methacrylates,
1-5% by weight of the olefinically unsaturated carboxylic acids and
0-5% by weight of the olefinically unsaturated carboxamides being polymerized in a first stage and
15-0.75% by weight of methyl methacrylate,
47.5-10.5% by weight of the butyl methacrylates,
1-5% by weight of the olefinically unsaturated carboxylic acids and
0-5% by weight of the olefinically unsaturated carboxamides being polymerized in a second stage, in such a way that the dispersion has a minimum film-forming temperature of 65-110°C and a light transmittance of not less than 85%, the percentages by weight in each case being based on the total monomers.

2. Use of an aqueous alkyl methacrylate copolymer dispersion prepared as claimed in claim 1, together with 95-40% by weight (solid/solid), based on both polymer dispersions, of an aqueous polyalkyl methacrylate dispersion which has a minimum film-formation temperature of 20-60°C and a light transmittance of not less than 80% and whose polymer is composed of 95-99% by weight of methacrylates of alkanols of 1 to 8 carbon atoms and of 1-5% by weight of $\alpha,\beta$-monoolefinically unsaturated mono- and/or dicarboxylic acids of 1 to 6 carbon atoms and/or their amides, as a binder in wood finishes.

## Revendications

1. Procédé de préparation de dispersions aqueuses de copolymères de méthacrylate d'alkyle avec des acides mono- et/ou dicarboxyliques qui contiennent de 3 à 6 atomes de carbone, par la copolymérisation en émulsion graduelle, en présence d'amorceurs de polymérisation qui engendrent des radicaux, solubles dans l'eau, habituels et d'émulsifs usuels, aux températures de polymérisation habituelles, caractérisé en ce que l'on polymérise

au moins 37,5% en poids de méthacrylate de méthyle,

14,75 à 62,5% en poids de méthacrylate de n-butyle et/ou de méthacrylate d'isobutyle,

1 à 5% en poids d'acides mono- et/ou dicarboxyliques à insaturation monooléfinique en $\alpha,\beta$, contenant de 3 à 6 atomes de carbone et

0 à 5% en poids d'amides d'acides mono- et/ou dicarboxyliques à insaturation monooléfinique en $\alpha,\beta$ contenant de 3 à 5 atomes de carbone,

en émulsion aqueuse, où au cours d'un premier échelon, on polymérise

80,75 à 35% en poids de méthacrylate de méthyle,

25,5 à 2,5% en poids du méthacrylate de butyle,

1 à 5% en poids des acides carboxyliques à insaturation oléfinique et

0 à 5% en poids des amides d'acides carboxyliques à insaturation oléfinique

et, au cours d'un second échelon, on polymérise

15 à 0,75% en poids de méthacrylate de méthyle,

47,5 à 10,5% en poids du méthacrylate de butyle,

1 à 5% en poids des acides carboxyliques à insaturation oléfinique et

0 à 5% en poids des amides d'acides carboxyliques à insaturation oléfinique,

en une manière telle que la dispersion possède une température de formation de pellicule minimale de 65 à 110°C et un indice de transparence à la lumière d'au moins 85%, les pourcentages pondéraux se rapportant à chaque fois aux monomères globaux.

2. Utilisation des dispersions de copolymères de méthacrylate d'alkyle aqueuses, préparées selon la revendication 1, conjointement avec 95 à 40% en poids (solide/solide), par rapport aux deux dispersions de polymères, d'une dispersion de polyméthacrylate d'alkyle d'une température de formation de pellicule minimale de 20 à 60°C et d'un indice de transparence à la lumière d'au moins 80%, dont le polymère se compose pour 95 à 99% de son poids d'esters de l'acide méthacrylique d'alcanols contenant de 1 à 8 atomes de carbone et pour 1 à 5% de son poids d'acides mono- et/ou dicarboxyliques, à insaturation monooléfinique en $\alpha,\beta$, contenant de 1 à 6 atomes de carbone et/ou de leurs amides, à titre de liants pour des vernis, laques ou émaux pour le bois.